# FASCICULE DE BREVET EUROPEEN

(11) **EP 3 208 193 B1**
(45) Date de publication et mention de la délivrance du brevet: **06.06.2018**
(21) Numéro de dépôt: 17154757.3
(22) Date de dépôt: 06.02.2017
(51) Int. Cl.: B64C 27/12, B64D 31/06, B64D 35/08

(54) **DISPOSITIF ET MÉTHODE DE COMMANDE D'UN EMBRAYAGE ENTRE LE MOTEUR ET LA BOITE DE TRANSMISSION PRINCIPALE DE PUISSANCE D'UN AÉRONEF**
VORRICHTUNG UND METHODE ZUR STEUERUNG EINER KUPPLUNG ZWISCHEN DEM MOTOR UND DEM HAUPTLEISTUNGSÜBERTRAGUNGSGETRIEBE EINES LUFTFAHRZEUGS
A DEVICE AND A METHOD OF CONTROLLING ENGAGEMENT BETWEEN THE ENGINE AND A MAIN POWER TRANSMISSION GEARBOX OF AN AIRCRAFT

(30) Priorité: 18.02.2016 FR 1600268
(43) Date de publication de la demande: 23.08.2017
(73) Titulaire: Airbus Helicopters, 13725 Marignane Cedex (FR)
(72) Inventeur: DUMUR, Guillaume, 13300 SALON DE PROVENCE (FR)
(74) Mandataire: GPI & Associés

(56) Documents cités:
- WO-A2-2011/026478
- FR-A- 793 210
- GB-A- 734 450
- US-A- 6 077 041

## Description

La présente invention est du domaine des moyens de transmission mécanique de puissance destinés aux aéronefs. La présente invention est en particulier du domaine des moyens de couplage/découplage de deux arbres de transmission mécanique de puissance et destinée aux aéronefs à voilures tournantes.

La présente invention concerne un dispositif et une méthode de commande d'un embrayage agencé entre le moteur et la boîte de transmission principale de puissance mécanique d'un aéronef. La présente invention concerne également une installation motrice munie d'un tel dispositif de commande d'un embrayage.

Un aéronef à voilure tournante comporte une motorisation, une boîte de transmission principale de puissance mécanique, au moins un rotor principal, assurant généralement la sustentation et la propulsion de l'aéronef, et éventuellement un dispositif anticouple pour contrôler les mouvements en lacet de cet aéronef. La motorisation de l'aéronef entraine en rotation, par l'intermédiaire de la boîte de transmission principale, chaque rotor principal et éventuellement le dispositif anticouple.

Cette motorisation peut comporter un ou plusieurs moteurs à explosion interne de différents types, tels qu'un moteur à pistons ou bien une turbine à gaz également désignée turbomoteur. Un turbomoteur comporte en principe plusieurs étages de compression de l'air d'admission, une chambre de combustion et une turbine de détente à plusieurs étages. Chaque étage de la turbine de détente est entrainé en rotation par les gaz issus de la combustion. Un turbomoteur peut alors être à turbine liée ou bien à turbine libre.

Dans un turbomoteur à turbine liée, l'arbre de sortie est solidaire de chaque étage de la turbine de détente et est également solidaire de l'arbre de rotation de chaque étage de compression. Ainsi, les étages de compression sont entraînés en rotation par l'ensemble des étages de la turbine de détente qui entraine également l'arbre de sortie. Il existe donc un couplage mécanique entre l'arbre de sortie d'un turbomoteur à turbine liée et les étages de compression de ce turbomoteur.

Dans un turbomoteur à turbine libre, la turbine de détente comporte généralement d'une part des premiers étages de détente solidaires des étages de compression et d'autre part des derniers étages de détente solidaires de l'arbre de sortie. Les premiers étages de la turbine de détente ne sont donc pas liés mécaniquement aux derniers étages de la turbine de détente, mais sont liés à l'arbre du compresseur. Ainsi, les étages de compression sont entraînés en rotation par les premiers étages de la turbine de détente alors que l'arbre de sortie est entrainé par les derniers étages de la turbine de détente constituant la turbine libre. De fait, aucun couplage mécanique n'existe entre l'arbre de sortie d'un turbomoteur à turbine libre et les étages de compression de ce turbomoteur.

Dans un moteur à pistons, l'arbre de sortie est solidaire du vilebrequin qui est entrainé en rotation par le déplacement des pistons. Il existe donc un couplage mécanique de l'arbre de sortie avec le vilebrequin et les pistons du moteur à pistons.

En outre, l'arbre de sortie de la motorisation d'un aéronef à voilure tournante est généralement lié mécaniquement à une entrée de la boîte de transmission principale de puissance mécanique afin d'entraîner en rotation chaque rotor principal et éventuellement le dispositif anticouple. Un aéronef à voilure tournante comporte généralement un seul rotor principal muni de plusieurs premières pales. Le dispositif anticouple est traditionnellement un rotor muni de secondes pales et positionné à l'extrémité de la poutre de queue de l'aéronef.

L'arbre de sortie de la motorisation de l'aéronef est ainsi lié mécaniquement à un rotor principal et ses premières pales ainsi qu'éventuellement à un rotor anticouple et ses secondes pales par l'intermédiaire de la boîte de transmission principale de puissance mécanique. En conséquence, cet arbre de sortie est soumis à une forte inertie due à la boîte de transmission principale de puissance mécanique, au rotor principal et ses premières pales et éventuellement au rotor anticouple et ses secondes pales.

Dans un souci de simplification, l'acronyme « BTP » sera utilisé dans la suite de la description pour désigner la boîte de transmission principale de puissance mécanique.

Un turbomoteur à turbine libre ne disposant d'aucun couplage mécanique entre l'arbre de sortie et les étages de compression peut démarrer sans entraîner mécaniquement en rotation l'arbre de sortie et, de fait, sans entraîner mécaniquement en rotation la BTP, le rotor principal et éventuellement le rotor anticouple. De même, lors de l'arrêt de ce turbomoteur à turbine libre, la BTP et le rotor principal n'entrainent pas mécaniquement en rotation les étages de compression. De fait, l'arbre de sortie d'un turbomoteur à turbine libre peut être lié mécaniquement à la BTP de façon permanente sans mécanisme de découplage.

Par contre, un moteur à pistons et un turbomoteur à turbine liée ne peuvent généralement pas démarrer en restant solidaires avec la BTP, l'inertie de cette BTP et du rotor principal étant trop importante.

Un mécanisme de couplage de type embrayage est alors généralement agencé entre l'arbre de sortie de chaque motorisation et la BTP. Chaque motorisation est ainsi démarrée seule, sans entraîner la rotation du rotor principal. Ensuite, le rotor principal et éventuellement le rotor anticouple sont entrainés progressivement en rotation par l'intermédiaire du mécanisme de couplage. Ce mécanisme de couplage est actionné par un pilote de l'aéronef par exemple par l'intermédiaire d'un levier agencé dans le poste de pilotage de l'aéronef.

Ce mécanisme de couplage peut également être utilisé lors de l'arrêt de la motorisation afin de découpler mécaniquement l'arbre de sortie de la motorisation et la BTP, évitant ainsi que le rotor principal entraine la rotation de la motorisation après son arrêt.

Ce mécanisme de couplage peut par exemple être un embrayage à courroie utilisé par exemple sur les aéronefs à voilures tournantes dits « ultra légers ». L'embrayage à courroie est actionné par un pilote de l'aéronef et l'entraînement du rotor principal par l'arbre de sortie de la motorisation se fait alors progressivement afin d'éviter que la motorisation cale.

Le mécanisme de couplage peut également être un embrayage centrifuge dont l'accouplement est automatique et lié à la vitesse de rotation de la motorisation.

Des exemples de mécanismes de couplage utilisés sur un aéronef sont notamment décrits dans les documents US 6077041, FR 793210, GB 734450 et WO 2011/026478.

Un système de couplage permet en fait le démarrage de l'aéronef en deux phases : tout d'abord, une première phase de démarrage proprement dit de la motorisation dont l'arbre de sortie est découplé mécaniquement de la BTP, puis une seconde phase d'accouplement mécanique de l'arbre de sortie de la motorisation avec un arbre d'entrée de la BTP.

La difficulté de cette seconde phase d'accouplement mécanique est donc de ne pas accoupler trop rapidement et brutalement l'arbre de sortie de la motorisation à la BTP afin d'éviter d'une part que la motorisation ne cale et d'autre part un endommagement de la BTP, de la motorisation et/ou du mécanisme de couplage. En effet, un accouplement brutal peut transmettre trop de puissance instantanée à la BTP et dépasser les capacités de cette BTP. La BTP est alors soumise à un surcouple entrainant des dommages et des opérations de maintenance associées sur la BTP. L'aéronef est alors immobilisé et génère des coûts de maintenance qui peuvent être importants.

De plus, la BTP est particulièrement vulnérable lors de son couplage avec la motorisation. En effet, la lubrification de cette BTP est généralement effectuée par des pompes entrainées par la BTP elle-même. De fait, cette lubrification n'est pas effective tant que la BTP n'est pas entraînée en rotation. La lubrification est ensuite effective progressivement lorsque la BTP est entrainée en rotation. Ainsi, un accouplement trop rapide entre la motorisation et la BTP peut entraîner la BTP à des vitesses de rotation importante alors que sa lubrification n'est pas totalement effective et dégrader alors les composants de cette BTP.

De même, un accouplement trop rapide ou brutal entre la motorisation et la BTP peut générer des dégradations importantes sur la motorisation et/ou le mécanisme de couplage.

Afin de limiter ce risque durant cette seconde phase d'accouplement mécanique, la puissance de la motorisation est transmise progressivement à la BTP.

Le contrôle du couple et de la vitesse de rotation de la motorisation lors de cette seconde phase d'accouplement mécanique doit être effectué manuellement par le pilote qui modifie par exemple le débit de carburant injecté dans la motorisation. La consigne du pilote est alors de contrôler l'injection de carburant pour maintenir une vitesse de rotation de la motorisation suffisante afin d'entraîner la BTP et d'éviter à la motorisation de caler.

D'une manière générale, chaque motorisation est contrôlée par un système de contrôle pour par exemple gérer la phase de démarrage et/ou réguler sa vitesse de rotation.

Originellement, un système de contrôle était un système uniquement mécanique ou bien hydromécanique.

Aujourd'hui, un système de contrôle est un boîtier électronique de contrôle de la motorisation qui gère le fonctionnement de la motorisation et en particulier son démarrage et son arrêt. Un tel boîtier électronique de contrôle est couramment désigné par l'acronyme *EECU* pour « Electronic Engine Control Unit » en langue anglaise.

Sur certains aéronefs, ce système de contrôle est un calculateur moteur, qui est couramment désigné par l'acronyme *FADEC* pour « Full Authority Digital Engine Controller » en langue anglaise. Ce calculateur moteur *FADEC* a une autorité plus importante que le boîtier électronique de contrôle *EECU* et limite ainsi l'intervention du pilote dans la gestion et le fonctionnement de la motorisation. Un calculateur moteur *FADEC* peut notamment réguler la vitesse de rotation de la motorisation ainsi que le couple fourni par cette motorisation.

Ce calculateur moteur *FADEC* permet également de déterminer les limites d'utilisation courantes de la motorisation en prenant en compte les conditions de vol et diverses informations issues du fonctionnement de la motorisation de l'aéronef et de son environnement.

Toutefois, la plupart des aéronefs équipés d'un système de couplage entre la motorisation et la BTP ne disposent pas de calculateur moteur *FADEC.*

La présente invention a pour but de s'affranchir des limitations mentionnées ci-dessus et de faciliter le démarrage de la motorisation d'un aéronef, en particulier lorsque cette motorisation est un moteur à pistons ou bien un turbomoteur à turbine liée. La présente invention permet notamment de réduire significativement le risque d'endommagement de la BTP lors de cette phase de démarrage de la motorisation en assistant ou bien en automatisant la phase de couplage de la motorisation à la BTP.

La présente invention a alors pour objet un dispositif et une méthode de commande d'un mécanisme de couplage entre une motorisation et une boîte de transmission principale de puissance mécanique BTP ainsi qu'une installation motrice munie d'un tel dispositif de commande.

Cette méthode et ce dispositif de commande d'un mécanisme de couplage selon l'invention sont en particulier destinés à une installation motrice d'un aéronef à voilure tournante.

Une telle méthode de commande pour commander un mécanisme de couplage selon l'invention entre une motorisation et une boîte de transmission principale de puissance mécanique BTP est destinée à un aéronef. L'aéronef comporte au moins une motorisation, une BTP et au moins un mécanisme de couplage, un mécanisme de couplage étant agencé entre chaque motorisation et la BTP et permettant de solidariser un arbre de sortie de chaque motorisation avec un arbre d'entrée de la BTP.

Un système de contrôle est relié à chaque motorisation afin de gérer le fonctionnement de cette motorisation. Ce système de contrôle permet notamment de réguler une première vitesse de rotation de la motorisation et de contrôler le couple transmis par cette motorisation. On entend par « contrôler le couple » à la fois vérifier la valeur de ce couple transmis par la motorisation et également modifier la valeur de ce couple. Ce système de contrôle est par exemple un calculateur moteur *FADEC.*

Chaque motorisation, chaque système de contrôle, chaque mécanisme de couplage et la BTP forment l'installation motrice de l'aéronef.

Cette méthode de commande selon l'invention est remarquable en ce qu'elle comporte différentes étapes :
- la détermination d'un état d'une motorisation comportant une première mesure de la première vitesse de rotation de la motorisation,
- la détermination d'un état « prêt à embrayer » pour le mécanisme de couplage lié à la motorisation,
- l'embrayage du mécanisme de couplage lié à la motorisation,
- la détermination d'un couple admissible maximum par la BTP et
- la régulation de la motorisation afin que la première vitesse de rotation de la motorisation soit régulée selon une vitesse de rotation de consigne de la motorisation tout en contrôlant le couple fourni par la motorisation afin qu'il soit inférieur ou égal au couple admissible maximum par la BTP pendant l'embrayage du mécanisme de couplage.

La détermination d'un état d'une motorisation permet de définir si la motorisation a atteint des conditions de fonctionnement nominales pour permettre l'embrayage du moyen de couplage et en conséquence la solidarisation de l'arbre de sortie de la motorisation et de l'arbre d'entrée de la BTP.

En effet, si l'embrayage était effectué alors que ces conditions de fonctionnement nominales ne sont pas atteintes, la motorisation risque au minimum de caler lors de l'embrayage, voire d'être dégradée.

La motorisation peut être un turbomoteur à turbine liée. Dans ce cas, la détermination d'un état de la motorisation comporte uniquement une première mesure de la première vitesse de rotation de la turbine liée. En effet, la vérification que ce turbomoteur a atteint une première vitesse de rotation de la turbine liée proche d'une vitesse de rotation de consigne est le principal critère permettant de vérifier que les conditions de fonctionnement nominales sont atteintes.

La motorisation peut également être un moteur à pistons utilisant par exemple comme carburant de l'essence ou bien du diesel. Dans ce cas, la détermination d'un état d'une motorisation comporte d'une part une première mesure de la première vitesse de rotation de l'arbre de sortie du moteur à pistons et d'autre part une deuxième mesure de la température d'un liquide de refroidissement du moteur à pistons et une troisième mesure de la température d'un premier liquide de lubrification du moteur à pistons. En effet, pour un moteur à pistons, il faut également s'assurer que le moteur à pistons a atteint une température de fonctionnement nominale afin de le solidariser avec la BTP. Cette température de fonctionnement est vérifiée en mesurant les températures du liquide de refroidissement et du premier liquide de lubrification circulant dans ce moteur à pistons.

Cette détermination de l'état de la motorisation peut être effectuée par un premier moyen de détermination d'un état d'une motorisation.

Ce premier moyen de détermination d'un état d'une motorisation comporte alors, lorsque la motorisation est un turbomoteur à turbine liée, un premier capteur de vitesse mesurant par exemple une première vitesse de rotation de l'arbre de rotation de la turbine liée.

Lorsque la motorisation est un moteur à pistons, ce premier moyen de détermination d'un état d'une motorisation comporte un premier capteur de vitesse mesurant par exemple une première vitesse de rotation de l'arbre sortie du moteur à pistons ainsi qu'un deuxième et un troisième capteurs de température mesurant respectivement la température du liquide de refroidissement et du premier liquide de lubrification du moteur à pistons.

En outre, ce premier moyen de détermination d'un état d'une motorisation peut être intégré au système de contrôle de cette motorisation, ce système de contrôle pouvant disposer de ces mesures de la première vitesse de rotation de la motorisation et le cas échéant des températures du liquide de refroidissement et du premier liquide de lubrification.

La détermination d'un état « prêt à embrayer » pour le mécanisme de couplage lié à la motorisation peut alors être effectuée si les conditions de fonctionnement sont nominales. Cette détermination de l'état « prêt à embrayer » est effectuée en vérifiant au minimum qu'un écart entre la première vitesse de rotation de la motorisation et la vitesse de rotation de consigne est inférieur ou égal à un premier seuil.

De plus, si la motorisation est un moteur à pistons, la détermination d'un état « prêt à embrayer » est effectuée en vérifiant également que la deuxième mesure de la température du liquide de refroidissement de la motorisation est située dans un premier intervalle de températures de fonctionnement et la troisième mesure de la température du premier liquide de lubrification est située dans un second intervalle de températures de fonctionnement.

Les premier et deuxième intervalles sont déterminés lors des essais et de la mise au point du moteur à pistons. Par exemple, le premier seuil est égal à 2100 tours par minute, le premier intervalle a comme bornes 60°C et 110°C et le deuxième intervalle a comme bornes 50°C et 130°C.

Par ailleurs, le premier et le deuxième intervalles peuvent être des intervalles comportant une seule borne définie, de préférence la borne inférieure. Par exemple, le premier intervalle contient les températures supérieures ou égales à 60°C et le deuxième intervalle contient les températures supérieures ou égales à 50°C.

Cette vitesse de rotation de consigne de la motorisation peut correspondre à une vitesse nominale de rotation du rotor principal ou bien à une vitesse de ralenti de ce rotor principal.

Cette détermination de l'état « prêt à embrayer » peut être effectuée par le premier moyen de détermination d'un état d'une motorisation. Cette détermination de l'état « prêt à embrayer » peut également être effectuée par un deuxième moyen de détermination d'un état « prêt à embrayer » dédié.

Lorsque ces conditions de fonctionnement nominales de la motorisation sont atteintes et vérifiées, l'état « prêt à embrayer » est déterminé. Un signal caractérisant cet état « prêt à embrayer » peut être fourni par le deuxième moyen de détermination d'un état « prêt à embrayer » ou le cas échéant par le premier moyen de détermination d'un état d'une motorisation. Ce signal peut être sous la forme d'un signal électrique ou bien optique par exemple.

Selon un premier mode de réalisation de l'invention, l'embrayage du mécanisme de couplage est réalisé de façon automatique dès que l'état « prêt à embrayer » est déterminé. Cet embrayage est ainsi effectué automatiquement, par l'intermédiaire par exemple d'un moyen de pilotage de l'embrayage du mécanisme de couplage, dès que les conditions de fonctionnement nominales sont atteintes et vérifiées. La progression de l'embrayage est alors gérée automatiquement par le moyen de pilotage afin d'éviter d'une part le calage de la motorisation et d'autre part un couple fourni par la motorisation trop important pour la BTP.

Ce premier mode de réalisation permet avantageusement une optimisation du temps de démarrage de la motorisation et d'embrayage. De plus, le pilote de l'aéronef est totalement déchargé de cette tâche de gestion de la solidarisation de la motorisation avec la BTP et peut se consacrer à d'autres tâches nécessaires à la préparation du vol de l'aéronef. Enfin, cette opération d'embrayage est également sécurisée afin de garantir la non dégradation de la motorisation, du mécanisme de couplage et de la BTP, cette opération d'embrayage étant réalisée de façon automatique.

Selon un deuxième mode de réalisation de l'invention, l'embrayage du mécanisme de couplage est réalisé de façon automatique lorsque l'état « prêt à embrayer » est déterminé et après validation par un pilote de l'aéronef. La méthode selon ce deuxième mode de réalisation comporte différentes étapes complémentaires situées entre la détermination d'un état « prêt à embrayer » et l'embrayage du mécanisme de couplage.

Tout d'abord, une première étape complémentaire de fourniture par un moyen d'information de l'aéronef d'une information « prêt à embrayer » à un pilote de l'aéronef est réalisée dès que l'état « prêt à embrayer » est déterminé. Puis, une seconde étape complémentaire d'activation par le pilote d'un ordre d'embrayage du mécanisme de couplage par l'intermédiaire d'un moyen d'action agencé dans un poste de pilotage de l'aéronef est réalisée.

Le moyen d'information peut être un moyen de visualisation, tel un écran ou un voyant, affichant l'information « prêt à embrayer ». Ce moyen d'information peut également fournir cette information sous forme sonore. Le moyen d'action est par exemple un bouton poussoir agencé sur le tableau de bord de l'aéronef. Le pilote choisit ainsi, en agissant sur le moyen d'action une fois qu'il a pris connaissance de l'information « prêt à embrayer », le moment de démarrage de l'opération d'embrayage du mécanisme de couplage.

L'embrayage est ainsi réalisé de façon automatique par l'intermédiaire du moyen de pilotage de l'embrayage du mécanisme de couplage dès que ces deux conditions sont réunies, à savoir la détermination de l'état « prêt à embrayer » et l'activation par le pilote du moyen d'action. Le moyen d'action fournit par exemple un signal d'embrayage, sous forme électrique ou optique, au moyen de pilotage. La progression de l'embrayage est là encore gérée automatiquement par un moyen de pilotage afin d'éviter le calage de la motorisation et un couple trop important fourni par la motorisation.

Ce deuxième mode de réalisation permet avantageusement de décharger le pilote de l'aéronef de cette tâche de gestion de l'embrayage et également de sécuriser cette opération d'embrayage. De plus, le pilote peut choisir le moment de la solidarisation de la motorisation avec la BTP afin d'éviter par exemple d'entrainer la BTP en rotation alors que le décollage de l'aéronef n'est pas imminent. En effet, la motorisation peut être démarrée pour que l'aéronef à voilure tournante soit alimenté électriquement afin par exemple de préparer le vol sans que le rotor principal ne soit entrainé en rotation.

Selon un troisième mode de réalisation de l'invention, l'embrayage du mécanisme de couplage est réalisé de façon manuelle par le pilote de l'aéronef lorsque l'état « prêt à embrayer » est déterminé. La méthode selon ce troisième mode de réalisation comporte une étape complémentaire située entre la détermination d'un état « prêt à embrayer » et l'embrayage du mécanisme de couplage. Cette étape complémentaire est la fourniture par un moyen d'information de l'aéronef de l'information « prêt à embrayer » dès que l'état « prêt à embrayer » est déterminé. Comme précédemment, l'information « prêt à embrayer » peut être fournie sous une forme visuelle ou sonore.

L'embrayage du mécanisme de couplage est ensuite réalisé de façon manuelle par un pilote par l'intermédiaire d'un levier d'embrayage agencé dans un poste de pilotage de l'aéronef. Le moyen de pilotage de l'embrayage du mécanisme de couplage comporte le levier d'embrayage.

Le pilote doit alors gérer lui-même la progression de l'embrayage afin de solidariser progressivement la motorisation et la BTP. Toutefois, afin d'aider le pilote à réaliser cet embrayage, la motorisation est régulée selon la vitesse de rotation de consigne de la motorisation tout en contrôlant que le couple fourni par la motorisation reste inférieur ou égal au couple admissible maximum par la BTP. De la sorte, la méthode de commande pour commander un mécanisme de couplage selon l'invention permet avantageusement de limiter le risque de calage de la motorisation, voire d'éviter ce calage et d'autre part un couple trop important fourni par la motorisation et susceptible d'entraîner des dégradations notamment sur la BTP, la motorisation ou bien le mécanisme de couplage.

Pour les premier et deuxième modes de réalisation de l'invention, l'embrayage du mécanisme de couplage est réalisé de façon automatique par le moyen de pilotage.

Le mécanisme de couplage lors de l'opération d'embrayage peut être régulé en pilotant une vitesse d'embrayage. On entend par « vitesse d'embrayage » la vitesse des composants mobiles du mécanisme de couplage permettant la solidarisation de l'arbre de sortie de la motorisation avec l'arbre d'entrée de la BTP. Par exemple, si le mécanisme de couplage est un embrayage à disques, cette vitesse d'embrayage est la vitesse de rapprochement des disques solidaires respectivement de l'arbre de sortie de la motorisation et de l'arbre d'entrée de la BTP.

La régulation du mécanisme de couplage peut être effectuée en fonction de la première vitesse de rotation de la motorisation et de la vitesse de rotation de consigne de la motorisation. Par exemple, la vitesse d'embrayage est par défaut égale à une vitesse maximale prédéfinie et est maintenue égale à cette vitesse maximale prédéfinie tant que l'écart entre la vitesse de rotation de consigne de la motorisation et la première vitesse de rotation est inférieur ou égal à un deuxième seuil prédéfini. Cette vitesse d'embrayage peut ensuite être réduite si la première vitesse de rotation diminue et s'éloigne de la vitesse de rotation de consigne, l'écart entre la vitesse de rotation de consigne et la première vitesse de rotation devenant supérieur à ce deuxième seuil prédéfini. Ce deuxième seuil peut être égal au premier seuil.

Cette régulation du mécanisme de couplage peut également être effectuée en fonction du couple fourni par la motorisation et du couple admissible maximum par la BTP. Par exemple, la vitesse d'embrayage est par défaut égale à la vitesse maximale prédéfinie et est maintenue égale à cette vitesse maximale prédéfinie tant que l'écart entre le couple admissible maximum par la BTP et le couple fourni par la motorisation est supérieur ou égal à un troisième seuil prédéfini, le couple fourni par la motorisation étant inférieur au couple admissible maximum. Cette vitesse d'embrayage peut ensuite être réduite si le couple fourni par la motorisation se rapproche du couple admissible maximum par la BTP et si l'écart entre le couple admissible maximum par la BTP et le couple fourni par la motorisation est inférieur à ce troisième seuil prédéfini.

La méthode de commande d'un mécanisme de couplage selon l'invention peut ainsi permettre une optimisation du temps d'embrayage pour minimiser le temps entre le démarrage de la motorisation et le décollage d'un aéronef à voilure tournante. Une telle optimisation est obtenue par exemple en privilégiant une vitesse d'embrayage maximum et en augmentant la valeur du deuxième seuil et/ou en réduisant la valeur du troisième seuil. De telles conditions peuvent par exemple être utilisées dans le cas de missions militaires nécessitant un décollage rapide de l'aéronef.

La méthode de commande d'un mécanisme de couplage selon l'invention peut également permettre d'optimiser la durée de vie de la motorisation, du mécanisme de couplage et de la BTP. Une telle optimisation est obtenue en sollicitant progressivement la motorisation, le mécanisme de couplage et la BTP lors de cette opération d'embrayage. De telles conditions correspondent par exemple à un deuxième seuil faible qui évite une première vitesse de rotation de la motorisation trop faible et un troisième seuil important évitant que la motorisation entraîne la BTP avec un couple proche du couple admissible maximum par la BTP.

Par ailleurs, le mécanisme de couplage lors de l'opération d'embrayage peut également être régulé en pilotant une position d'embrayage. On entend par « position d'embrayage » la position des composants mobiles du mécanisme de couplage. Par exemple, si le mécanisme de couplage est un embrayage à disques, cette position d'embrayage est la position relative des disques formant ce mécanisme de couplage, ces disques étant respectivement solidaires de l'arbre de sortie de la motorisation et de l'arbre d'entrée de la BTP. Dans ce cas, la vitesse d'embrayage est constante et prédéfinie lorsque cette position d'embrayage change ou bien est nulle lorsque la position d'embrayage ne change pas.

En outre, la détermination du couple admissible maximum par la BTP peut être effectuée en fonction d'une quatrième mesure de la température d'un second liquide de lubrification de la BTP et d'une cinquième mesure de la pression du second liquide de lubrification de la BTP. La quatrième mesure de la température du second liquide de lubrification de la BTP est réalisée par l'intermédiaire d'un quatrième capteur de température et la cinquième mesure de la pression de ce second liquide de lubrification est réalisée par l'intermédiaire d'un cinquième capteur de pression du second liquide de lubrification.

Le couple admissible maximum par la BTP peut alors être déterminé à partir de ces deux mesures et à partir de lois de variation de ce couple admissible maximum par la BTP préalablement définies. Ces lois de variation sont établies lors d'essais de l'installation motrice sur banc d'essais ou bien lors de vols d'essais de l'aéronef équipé de cette installation motrice. Ces essais peuvent également intégrer des simulations de fonctionnement de l'installation motrice. Ces lois de variation peuvent être représentées sous la forme d'abaques par exemple.

Toutefois, la cinquième mesure de la pression du second liquide de lubrification de la BTP peut être remplacée par une sixième mesure de la seconde vitesse de rotation de la BTP. En effet, le second liquide de lubrification de la BTP est entraîné par une pompe elle-même entrainée en rotation par la BTP. En outre, une troisième vitesse de rotation de cette pompe peut permettre de quantifier la pression du liquide de lubrification et est proportionnelle à la seconde vitesse de rotation de la BTP. De fait, cette sixième mesure de la seconde vitesse de rotation de la BTP permet de quantifier la pression du liquide de lubrification de la BTP. Le couple admissible maximum par la BTP peut alors être déterminé à partir de cette sixième mesure de la seconde vitesse de rotation de la BTP et de la quatrième mesure de la température du second liquide de lubrification de la BTP. Cette sixième mesure de la seconde vitesse de rotation de la BTP est réalisée par l'intermédiaire d'un sixième capteur de vitesse.

De plus, selon une variante de la méthode de commande d'un mécanisme de couplage selon l'invention, la détermination du couple admissible maximum par la BTP peut être effectuée uniquement à partir d'une cinquième mesure de la pression du second liquide de lubrification de la BTP. Le couple admissible maximum est alors égal à un couple réduit si la cinquième mesure de la pression du second liquide de lubrification est inférieure ou égale à un quatrième seuil alors que le couple admissible maximum est égal à un couple maximum si la cinquième mesure de la pression du second liquide de lubrification est supérieure au quatrième seuil.

Enfin, la régulation de la motorisation permet parallèlement à l'embrayage du mécanisme de couplage et à la détermination du couple admissible maximum par la BTP de contrôler le fonctionnement de la motorisation. Cette régulation de la motorisation est effectuée par le système de contrôle de la motorisation et permet de réguler la première vitesse de rotation de la motorisation selon une vitesse de rotation de consigne de la motorisation ainsi que de contrôler le couple fourni par la motorisation afin qu'il soit inférieur ou égal au couple admissible maximum par la BTP pendant l'embrayage du mécanisme de couplage.

L'embrayage du mécanisme de couplage lié à la motorisation, la détermination du couple admissible maximum par la BTP et la régulation de la motorisation sont réalisés simultanément.

La présente invention a aussi pour objet un dispositif de commande d'un mécanisme de couplage entre une motorisation et une boîte de transmission principale de puissance mécanique BTP destiné à un aéronef, l'aéronef comportant au moins une motorisation, un système de contrôle pour chaque motorisation, une BTP et au moins un mécanisme de couplage, un mécanisme de couplage agencé entre chaque motorisation et la BTP permettant de solidariser un arbre de sortie de la motorisation avec un arbre d'entrée de la BTP.

Ce dispositif de commande du mécanisme de couplage est apte à mettre en oeuvre la méthode de commande pour commander un mécanisme de couplage précédemment décrite et comporte :
- un premier moyen de détermination d'un état de la motorisation muni d'un premier capteur de vitesse destiné à mesurer une première vitesse de rotation de la motorisation,
- un deuxième moyen de détermination d'un état « prêt à embrayer » pour le mécanisme de couplage,
- un troisième moyen de détermination d'un couple admissible maximum par la BTP et
- un moyen de pilotage de l'embrayage du mécanisme de couplage lié à la motorisation,

Chaque système de contrôle de la motorisation peut être un calculateur moteur FADEC. Ce calculateur moteur *FADEC* peut garantir à chaque instant que la puissance et le couple délivrés n'endommagent pas les dispositifs présents en aval de la motorisation, et notamment la BTP. Ce calculateur moteur *FADEC* permet ainsi d'une part de garantir le bon fonctionnement de la chaîne de transmission de puissance de l'aéronef et d'assurer un vol en sécurité de l'aéronef, et d'autre part d'autoriser une durée de vie importante de cette chaîne de transmission de puissance et en particulier celle de la BTP.

La présente invention a également pour objet une installation motrice destinée à un aéronef à voilure tournante. Cette installation motrice comporte au moins une motorisation, un système de contrôle pour chaque motorisation, une boîte de transmission principale de puissance mécanique, au moins un mécanisme de couplage et un dispositif de commande de chaque mécanisme de couplage tel que précédemment décrit. Un mécanisme de couplage est agencé entre chaque motorisation et la BTP et permet de solidariser un arbre de sortie de chaque motorisation avec un arbre d'entrée de la BTP.

L'invention et ses avantages apparaîtront avec plus de détails dans le cadre de la description qui suit avec des exemples de réalisation donnés à titre illustratif en référence aux figures annexées qui représentent :
- la figure 1, un aéronef muni d'une installation motrice selon l'invention,
- les figures 2 à 4, trois modes de réalisation de cette installation motrice,
- les figures 5 à 7, trois schémas synoptiques d'une méthode de commande d'un mécanisme de couplage,
- la figure 8, un graphique déterminant le couple admissible maximum par la BTP, et
- la figure 9, un graphique permettant de déduire le couple admissible maximum par la BTP.

Les éléments présents dans plusieurs figures distinctes sont affectés d'une seule et même référence.

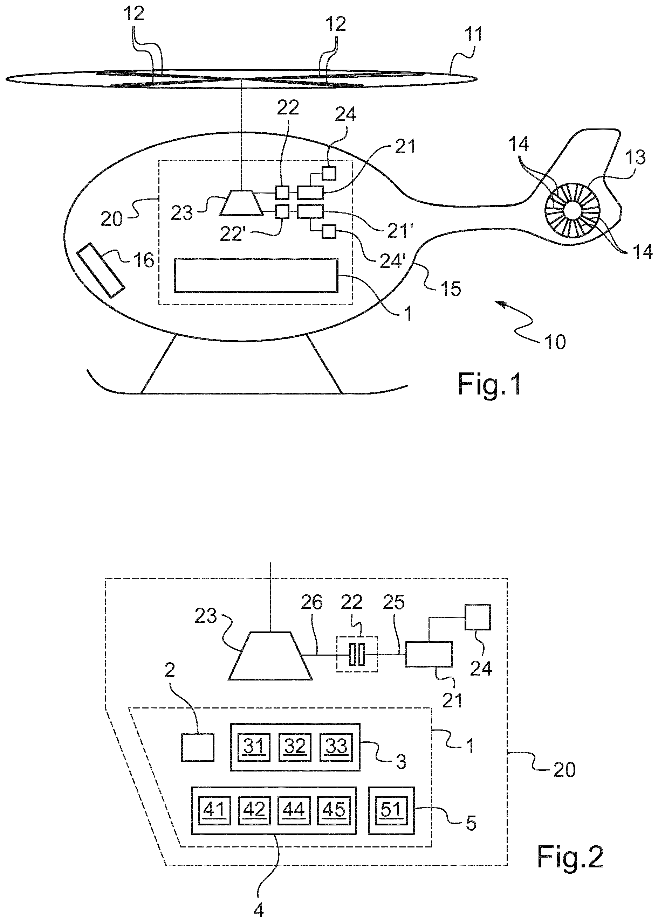

La figure 1 représente un aéronef 10 à voilure tournante comportant un fuselage 15, un rotor principal 11 muni de premières pales 12, un rotor anticouple 13 muni de secondes pales 14, un tableau de bord 16 et une installation motrice 20 entraînant en rotation les premières pales 12 du rotor principal 11 et les secondes pales 14 du rotor anticouple 13. Trois modes de réalisation différents de l'installation motrice 20 sont représentés sur les figures 2 à 4.

Ces trois modes de réalisation différents de l'installation motrice 20 comportent toutefois de façon commune au moins une motorisation 21,21', un système de contrôle 24,24' pour chaque motorisation 21,21', une unique boîte de transmission principale de puissance mécanique BTP 23, au moins un mécanisme de couplage 22,22' et un unique dispositif 1 de commande de chaque mécanisme de couplage 22,22'. Chaque système de contrôle 24,24' est un calculateur moteur FADEC.

Un mécanisme de couplage 22,22' est agencé entre chaque motorisation 21,21' et la BTP 23. Chaque mécanisme de couplage 22,22' permet ainsi de solidariser un arbre de sortie 25,25' d'une motorisation 21,21' avec un arbre d'entrée 26 de la BTP 23. De la sorte, chaque motorisation 21,21' peut entraîner en rotation les premières pales 12 du rotor principal 11 et les secondes pales 14 du rotor anticouple 13 lorsque le mécanisme de couplage 22,22' est embrayé.

Chaque dispositif 1 de commande d'un mécanisme de couplage 22,22' comporte un premier moyen de détermination 3 d'un état de chaque motorisation 21,21', un deuxième moyen de détermination 5 d'un état « prêt à embrayer » pour chaque mécanisme de couplage 22,22', un troisième moyen de détermination 4 d'un couple admissible maximum par la BTP 23 et un moyen de pilotage 2 de l'embrayage du mécanisme de couplage 22,22' lié à chaque motorisation 21,21'.

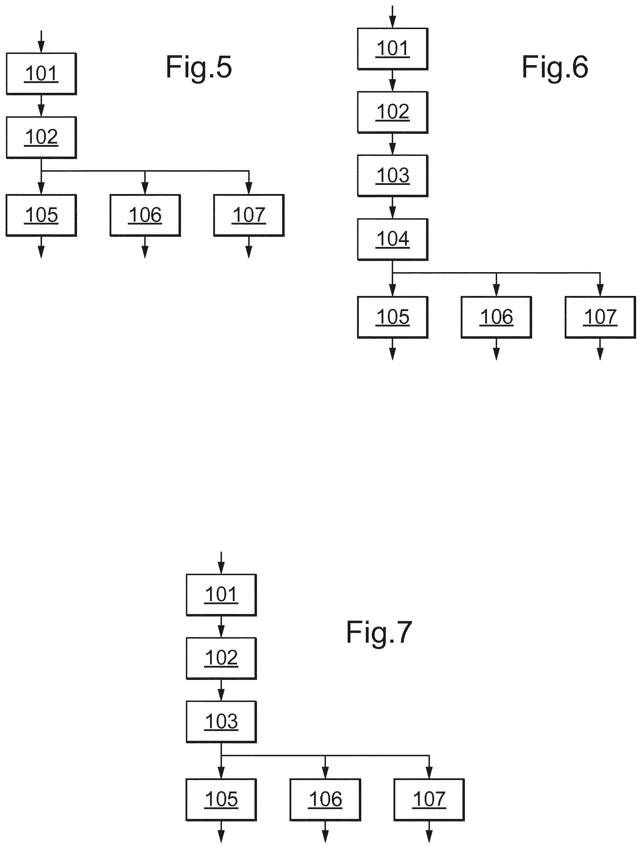

A chaque installation motrice 20 représentée sur les figures 2 à 4 est attachée une méthode de commande pour commander un mécanisme de couplage 22,22' dont un schéma synoptique est respectivement représenté sur les figures 5 à 7.

Une première installation motrice 20 est représentée sur la figure 2 et comporte une motorisation 21, qui est un moteur à pistons, un système de contrôle 24 de ce moteur à pistons 21, un mécanisme de couplage 22 agencé entre l'arbre de sortie 25 du moteur à pistons 21 ainsi que l'arbre d'entrée 26 de la BTP 23 et un dispositif 1 de commande du mécanisme de couplage 22. Ce dispositif 1 de commande du mécanisme de couplage 22 peut mettre en oeuvre la méthode dont le schéma synoptique est représenté sur la figure 5 et qui comporte cinq étapes.

Le premier moyen de détermination 3 comporte un premier capteur de vitesse 31 destiné à mesurer une première vitesse de rotation de l'arbre de sortie 25 du moteur à pistons 21, un deuxième capteur de température 32 destiné à mesurer une deuxième mesure de la température d'un liquide de refroidissement du moteur à pistons 21 et un troisième capteur de température 33 destiné à mesurer une troisième mesure de la température d'un premier liquide de lubrification du moteur à pistons 21.

Ainsi, au cours de la première étape 101 de détermination d'un état du moteur à pistons 21, le premier moyen de détermination 3 délivre la première vitesse de rotation de l'arbre de sortie 25 du moteur à pistons 21, la deuxième mesure de la température du liquide de refroidissement du moteur à pistons 21 et la troisième mesure de la température du premier liquide de lubrification du moteur à pistons 21 caractérisant un état du moteur à pistons 21.

Le deuxième moyen de détermination 5 comporte un comparateur 51 afin de comparer la première mesure de la première vitesse de rotation de l'arbre de sortie 25 du moteur à pistons 21 avec une vitesse de rotation de consigne de cet arbre de sortie 25, la deuxième mesure de la température du liquide de refroidissement du moteur à pistons 21 avec un premier intervalle de températures de fonctionnement et la troisième mesure de la température du premier liquide de lubrification avec un second intervalle de températures de fonctionnement.

De fait, au cours de la deuxième étape 102 de détermination de l'état « prêt à embrayer », le deuxième moyen de détermination 5 délivre l'état « prêt à embrayer » pour le mécanisme de couplage 22 lorsque simultanément un écart entre la première mesure de la première vitesse de rotation et la vitesse de rotation de consigne est inférieur ou égal à un premier seuil, la deuxième mesure de la température du liquide de refroidissement du moteur à pistons 21 est située dans le premier intervalle de températures de fonctionnement et la troisième mesure de la température du premier liquide de lubrification est située dans le second intervalle de températures de fonctionnement.

Dès que cet état « prêt à embrayer » est délivré, les trois étapes suivantes 105,106,107 sont réalisées simultanément.

Le troisième moyen de détermination 4 est muni d'un quatrième capteur de température 41 et d'un cinquième capteur de pression 42 destinés à mesurer respectivement une quatrième mesure de la température et une cinquième mesure de la pression du second liquide de lubrification de la BTP 23. Le troisième moyen de détermination 4 comporte également un calculateur 44 et une mémoire 45.

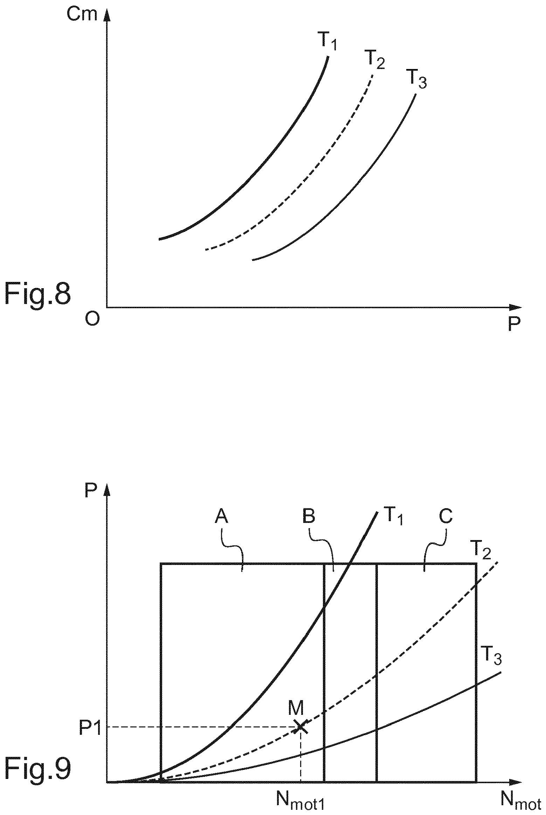

Ainsi, au cours de la troisième étape 105 de détermination du couple admissible maximum par la BTP 23, le troisième moyen de détermination 4 délivre tout d'abord une quatrième mesure de la température et une cinquième mesure de la pression du second liquide de lubrification de la BTP 23. Ensuite, le calculateur 44 calcule le couple admissible maximum par la BTP 23 en fonction de la quatrième mesure de la température, de la cinquième mesure de la pression du second liquide de lubrification de la BTP 23 et de résultats d'essais tels que représentés par le graphique de la figure 8.

Ce graphique représente des courbes caractérisant la variation du couple admissible maximum Cm (en ordonnée) en fonction de la pression P du second liquide de lubrification de la BTP 23 (en abscisse), chaque courbe est caractérisée par une température (*T1,T2,T3*) du second liquide de lubrification. De fait, connaissant la quatrième mesure de la température et la cinquième mesure de la pression du second liquide de lubrification de la BTP 23, le troisième moyen de détermination 4 détermine le couple admissible maximum par la BTP 23. Chaque courbe est stockée dans la mémoire 45.

Le moyen de pilotage 2 de l'embrayage du mécanisme de couplage 22 est constitué par un calculateur permettant de piloter le mécanisme de couplage 22 afin de solidariser automatiquement le moteur à pistons 21 et la BTP 23. Le mécanisme de couplage 22 comporte un moyen d'action (non représenté) afin de réaliser automatiquement cette solidarisation. Ce moyen d'action est par exemple un vérin permettant de rapprocher les composants mobiles tels que des disques de ce mécanisme de couplage 22.

De fait, parallèlement à la troisième étape 105 et au cours de la quatrième étape 106 d'embrayage du mécanisme de couplage 22, le moyen de pilotage 2 commande le moyen d'action et, par suite, l'embrayage automatique du mécanisme de couplage 22 et solidarise ainsi l'arbre de sortie 25 du moteur à pistons 21 avec l'arbre d'entrée 26 de la BTP 23.

Le système de contrôle 24 permet de réguler la première vitesse de rotation de l'arbre de sortie 25 du moteur à pistons 21 selon une vitesse de rotation de consigne de l'arbre de sortie 25 et de contrôler le couple fourni par le moteur à pistons 21 afin qu'il soit inférieur ou égal au couple admissible maximum par la BTP 23.

De la sorte, parallèlement à la troisième étape 105 et à la quatrième étape 106 et au cours d'une cinquième étape 107 de régulation du moteur à pistons 21, le système de contrôle 24 régule la première vitesse de rotation de l'arbre de sortie 25 du moteur à pistons 21 selon la vitesse de rotation de consigne tout en contrôlant le couple fourni par le moteur à pistons 21 de sorte qu'il reste inférieur ou égal au couple admissible maximum par la BTP 23 précédemment défini.

Le moyen de pilotage 2 permet de réguler l'embrayage du mécanisme de couplage 22 en pilotant une vitesse d'embrayage en fonction de la première vitesse de rotation du moteur à pistons 21 et de la vitesse de rotation de consigne du moteur à pistons 21. Le moyen de pilotage 2 permet ainsi une optimisation du temps d'embrayage pour minimiser le temps entre le démarrage du moteur à pistons 21 et le décollage de l'aéronef 10 sans intervention de son pilote. Avantageusement, le dispositif 1 de commande du mécanisme de couplage 22 permet également de garantir une non dégradation du moteur à pistons 21, du mécanisme de couplage 22 et de la BTP 23 en contrôlant le fonctionnement du moteur à pistons 21 par l'intermédiaire du système de contrôle 24.

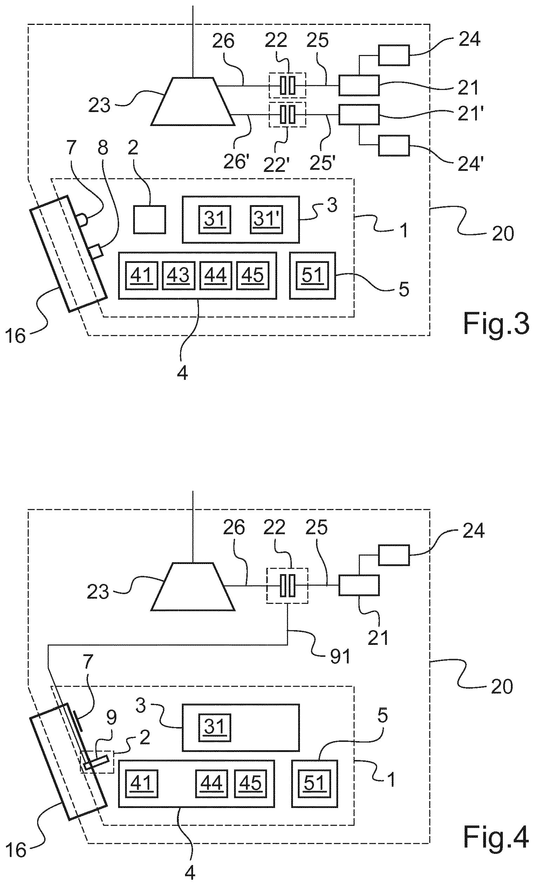

Une deuxième installation motrice 20 est représentée sur la figure 3 et comporte deux motorisations 21,21', qui sont des turbomoteurs à turbine liée, deux systèmes de contrôle 24,24' reliés respectivement à un turbomoteur 21,21', deux mécanismes de couplage 22,22' et un dispositif 1 de commande des mécanismes de couplage 22,22'. Le dispositif 1 de commande comporte un moyen d'information 7, tel un voyant, et un moyen d'action 8, tel un bouton poussoir, positionnés sur le tableau de bord 16 et peut mettre en oeuvre la méthode dont le schéma synoptique est représenté sur la figure 6 et qui comporte sept étapes.

Le premier moyen de détermination 3 comporte uniquement deux premiers capteurs de vitesse 31,31' destinés à mesurer une première vitesse de rotation de l'arbre de sortie 25,25' respectivement de chaque turbomoteur 21,21'.

Ainsi, au cours de la première étape 101 de détermination d'un état des turbomoteurs 21,21', le premier moyen de détermination 3 délivre la première vitesse de rotation de l'arbre de sortie 25 de chaque turbomoteur 21,21' qui permet de caractériser un état de chaque turbomoteur 21,21' et de déterminer leurs conditions de fonctionnement.

Le deuxième moyen de détermination 5 comporte un comparateur 51 afin de comparer la première mesure de la première vitesse de rotation de l'arbre de sortie 25 de chaque turbomoteur 21,21' avec une vitesse de rotation de consigne de cet arbre de sortie 25.

De fait, au cours de la deuxième étape 102 de détermination de l'état « prêt à embrayer », le deuxième moyen de détermination 5 délivre l'état « prêt à embrayer » pour les mécanismes de couplage 22,22' lorsqu'un écart entre la première mesure de la première vitesse de rotation et la vitesse de rotation de consigne est inférieur ou égal à un premier seuil.

Dès que cet état « prêt à embrayer » est délivré, une information « prêt à embrayer » est fournie à un pilote de l'aéronef 10 par l'allumage du voyant 7 au cours de l'étape complémentaire 103 de fourniture de l'information « prêt à embrayer ».

Ensuite, le pilote choisit, au cours d'une seconde étape complémentaire 104 d'activation d'un ordre d'embrayage des mécanismes de couplage 22,22', l'instant de démarrage de l'opération d'embrayage des mécanismes de couplage 22,22' en appuyant sur le bouton poussoir 8 après avoir pris connaissance de l'information « prêt à embrayer ».

Dès que le pilote à appuyer sur le bouton poussoir 8, les trois étapes suivantes 105,106,107 sont réalisées simultanément.

Le troisième moyen de détermination 4 du couple admissible maximum par la BTP 23 est muni d'un quatrième capteur de température 41 et d'un sixième capteur de vitesse 43 destinés à mesurer respectivement une quatrième mesure de la température du second liquide de lubrification et une sixième mesure de la seconde vitesse de rotation de la BTP 23. Le troisième moyen de détermination 4 comporte également un calculateur 44 et une mémoire 45.

Ainsi, au cours de la troisième étape 105 de détermination du couple admissible maximum par la BTP 23, le troisième moyen de détermination 4 délivre tout d'abord une quatrième mesure de la température du second liquide de lubrification et une sixième mesure de la seconde vitesse de rotation de la BTP 23. Ensuite, le calculateur 44 détermine le couple admissible maximum par la BTP 23 en fonction de la quatrième mesure de la température et de la sixième mesure de la seconde vitesse de rotation de la BTP 23 et des résultats d'essais, par exemple à l'aide d'un graphique équivalent à celui de la figure 8.

En outre, au cours de la troisième étape 105, le couple admissible maximum par la BTP 23 peut également être calculé en fonction de la quatrième mesure de la température, de la cinquième mesure de la pression du second liquide de lubrification de la BTP 23, de la première vitesse de rotation *Nmot* de l'arbre de sortie 25 de la motorisation 21 et de résultats d'essais tels que représentés par le graphique de la figure 9.

Ce graphique représente des courbes caractérisant la variation de la pression *P* du second liquide de lubrification de la BTP 23 (en ordonnée) en fonction de la première vitesse de rotation *Nmot* de l'arbre de sortie 25 de la motorisation 21 (en abscisse), chaque courbe est caractérisée par une température (*T1,T2,T3*) du second liquide de lubrification. Des zones A,B,C sont également définies sur ce graphique. A chaque zone A,B,C est attaché un couple admissible maximum par la BTP 23.

De fait, un point *M* caractérisé par une quatrième mesure de la température *T2* et une cinquième mesure de la pression *P1* du second liquide de lubrification de la BTP 23 ainsi que par une première vitesse de rotation *Nmot1* de l'arbre de sortie 25 de la motorisation 21 est positionné sur ce graphique dans la zone A. Le troisième moyen de détermination 4 détermine alors le couple admissible maximum par la BTP 23 correspondant à cette zone A. Chaque courbe est stockée dans la mémoire 45.

Le moyen de pilotage 2 de l'embrayage des mécanismes de couplage 22,22' est comme précédemment constitué par un calculateur 44 permettant de piloter les mécanismes de couplage 22,22' et chaque mécanisme de couplage 22,22' comporte un moyen d'action (non représenté) afin de réaliser automatiquement l'embrayage.

De fait, parallèlement à la troisième étape 105 et au cours de la quatrième étape 106 d'embrayage des mécanismes de couplage 22,22', le moyen de pilotage 2 commande les moyens d'action et, par suite, l'embrayage automatique des mécanismes de couplage 22,22' et solidarise ainsi l'arbre de sortie 25 de chaque turbomoteur 21,21' avec un arbre d'entrée 26 de la BTP 23.

Le système de contrôle 24 permet comme précédemment de réguler la première vitesse de rotation de l'arbre de sortie 25 du turbomoteur 21,21' selon une vitesse de rotation de consigne de l'arbre de sortie 25 et de contrôler le couple fourni par chaque turbomoteur 21,21' afin qu'il soit inférieur ou égal au couple admissible maximum par la BTP 23.

De la sorte, parallèlement à la troisième étape 105 et à la quatrième étape 106 et au cours d'une cinquième étape 107 de régulation du turbomoteur 21,21', le système de contrôle 24 régule la première vitesse de rotation de l'arbre de sortie 25 de chaque turbomoteur 21,21' selon la vitesse de rotation de consigne tout en contrôlant que le couple fourni par chaque turbomoteur 21,21' reste inférieur ou égal au couple admissible maximum par la BTP 23 précédemment défini.

Le moyen de pilotage 2 permet de réguler l'embrayage des mécanismes de couplage 22,22' en pilotant une vitesse d'embrayage en fonction du couple fourni par chaque turbomoteur 21,21' et du couple admissible maximum par la BTP 23. Le moyen de pilotage 2 permet ainsi d'optimiser la durée de vie des turbomoteurs 21,21' des mécanismes de couplage 22,22' et de la BTP 23 en contrôlant le fonctionnement du turbomoteur 21,21' par l'intermédiaire du système de contrôle 24 et notamment le couple fourni par chaque turbomoteur 21,21' de sorte qu'il soit inférieur ou égal au couple admissible maximum par la BTP 23.

Il est à noter que dans ce cas de cette deuxième l'installation motrice 20 comportant deux turbomoteurs 21,21', l'embrayage des deux mécanismes de couplage 22,22' peut être simultané ou séquentiel. Si l'embrayage des deux mécanismes de couplage 22,22' est simultané, c'est en fait la somme des couples fournis par les deux turbomoteurs 21,21' qui doit être inférieure ou égale au couple admissible maximum par la BTP 23. Par contre, l'embrayage des deux mécanismes de couplage 22,22' peut être séquentiel lorsque, par exemple, seul un premier turbomoteur 21 est démarré, puis est solidarisé à la BTP 23. Ensuite, le second turbomoteur 21' est solidarisé avec la BTP 23 pour être démarré. Dans ce cas, lorsque le premier turbomoteur 21 est solidarisé avec la BTP 23, c'est le couple fourni par ce seul premier turbomoteur 21 qui doit être inférieur ou égal au couple admissible maximum par la BTP 23.

Une troisième installation motrice 20 est représentée sur la figure 4 et comporte un seul turbomoteur à turbine liée 21, un système de contrôle 24 de ce turbomoteur 21, un mécanisme de couplage 22 et un dispositif 1 de commande du mécanisme de couplage 22. Le dispositif 1 de commande comporte un écran 7 et un levier d'embrayage 9 positionnés sur le tableau de bord 16 et peut mettre en oeuvre la méthode dont le schéma synoptique est représenté sur la figure 7 et qui comporte six étapes.

Le premier moyen de détermination 3 comporte uniquement un premier capteur de vitesse 31 destiné à mesurer une première vitesse de rotation de l'arbre de sortie 25 du turbomoteur 21. De fait, au cours de la première étape 101, le premier moyen de détermination 3 délivre la première vitesse de rotation de ce turbomoteur 21 permettant de caractériser un état de ce turbomoteur 21 et de déterminer ses conditions de fonctionnement.

Le deuxième moyen de détermination 5 est identique à celui de la seconde installation motrice 20. De même, la deuxième étape 102 est également identique à la deuxième étape 102 mise en oeuvre par la seconde installation motrice 20.

Dès que l'état « prêt à embrayer » est délivré, une information « prêt à embrayer » est fournie à un pilote de l'aéronef 10 par affichage d'un message sur l'écran 7 au cours de l'étape complémentaire 103 de fourniture de l'information «prêt à embrayer ».

Ensuite, le pilote effectue manuellement, au cours de la quatrième étape 106 d'embrayage du mécanisme de couplage 22, l'embrayage du mécanisme de couplage 22 par l'intermédiaire du levier d'embrayage 9 une fois qu'il a pris connaissance de l'information « prêt à embrayer ». Le moyen de pilotage 2 de l'embrayage du mécanisme de couplage 22 comporte le levier d'embrayage 9 et un moyen de transfert 91 reliant le levier d'embrayage 9 et le mécanisme de couplage 22.

Toutefois, le pilote doit uniquement gérer la progression de l'embrayage du mécanisme de couplage 22, le turbomoteur 21 étant contrôlé et régulé comme précédemment par le système de contrôle 24 au cours d'une cinquième étape 107 de régulation du turbomoteur 21, parallèlement à la quatrième étape 106.

De plus, parallèlement à la quatrième étape 106 et à la cinquième étape 107 et au cours de la troisième étape 105 de détermination du couple admissible maximum par la BTP 23, le troisième moyen de détermination 4 du couple admissible maximum par la BTP 23 est muni uniquement d'un cinquième capteur de pression 42 destiné à mesurer une cinquième mesure de la pression du second liquide de lubrification de la BTP 23. Le troisième moyen de détermination 4 comporte également un calculateur 44 et une mémoire 45.

Ainsi, au cours de la troisième étape 105 de détermination du couple admissible maximum par la BTP 23, le troisième moyen de détermination 4 délivre tout d'abord une cinquième mesure de la pression du second liquide de lubrification de la BTP 23. Ensuite, le calculateur 44 détermine le couple admissible maximum par la BTP 23 en fonction de cette cinquième mesure. Ce couple admissible maximum est égal à un couple réduit lorsque la cinquième mesure est inférieure ou égale à un quatrième seuil et le couple admissible maximum est égal à un couple maximum lorsque la cinquième mesure est supérieure au quatrième seuil. Les valeurs du couple réduit, du couple maximum et du quatrième seuil sont stockés dans la mémoire 45.

Naturellement, la présente invention est sujette à de nombreuses variations quant à sa mise en oeuvre, l'invention n'étant limitée que par le texte des revendications.

## Revendications

1. Méthode de commande pour commander un mécanisme de couplage (22,22') entre une motorisation (21,21') et une boîte de transmission principale de puissance mécanique BTP (23) destinée à un aéronef (10), ledit mécanisme de couplage (22,22') permettant de solidariser un arbre de sortie (25) de ladite motorisation (21,21') avec un arbre d'entrée (26) de ladite BTP (23),
**caractérisée en ce que** ladite méthode de commande comporte différentes étapes :
- la détermination (101) d'un état de ladite motorisation (21,21') comportant une première mesure d'une première vitesse de rotation de ladite motorisation (21,21'),
- la détermination (102) d'un état « prêt à embrayer » pour ledit mécanisme de couplage (22,22') lié à ladite motorisation (21,21'),
- l'embrayage (106) dudit mécanisme de couplage (22,22') lié à ladite motorisation (21,21'),
- la détermination (105) d'un couple admissible maximum par ladite BTP (23), et
- la régulation (107) de ladite motorisation afin que ladite première vitesse de rotation de ladite motorisation (21,21') soit régulée selon une vitesse de rotation de consigne de ladite motorisation (21,21') tout en contrôlant le couple fourni par ladite motorisation (21,21') afin qu'il soit inférieur ou égal audit couple admissible maximum par ladite BTP (23) pendant ledit embrayage (106) dudit mécanisme de couplage (22,22').

2. Méthode selon la revendication 1,
**caractérisée en ce que** ladite méthode comporte une étape complémentaire de fourniture (103) d'une information « prêt à embrayer » dès que ledit état « prêt à embrayer » est déterminé, ladite fourniture (103) d'une information « prêt à embrayer » étant effectuée entre ladite détermination (102) d'un état « prêt à embrayer » et ledit embrayage (106) dudit mécanisme de couplage (22,22'), ledit embrayage dudit mécanisme de couplage (22,22') étant alors réalisé de façon manuelle par un pilote par l'intermédiaire d'un levier d'embrayage (9) agencé dans un poste de pilotage dudit aéronef (10).

3. Méthode selon la revendication 1,
**caractérisée en ce que** ladite méthode comporte différentes étapes complémentaires situées entre ladite détermination (102) d'un état « prêt à embrayer » et ledit embrayage (106) dudit mécanisme de couplage (22,22') comprenant :
- la fourniture (103) par un moyen d'information (7) dudit aéronef (10) d'une information « prêt à embrayer » dès que ledit état « prêt à embrayer » est déterminé, et
- l'activation (104) par un pilote d'un ordre d'embrayage dudit mécanisme de couplage (22,22'), ledit embrayage dudit mécanisme de couplage (22,22') étant alors réalisé de façon automatique.

4. Méthode selon la revendication 1,
**caractérisée en ce que** ledit embrayage (106) dudit mécanisme de couplage (22,22') est réalisé de façon automatique dès que ledit état « prêt à embrayer » est déterminé.

5. Méthode selon l'une quelconque des revendications 3 à 4,
**caractérisée en ce que** ledit embrayage (106) dudit mécanisme de couplage (22,22') est réalisé en régulant une vitesse d'embrayage en fonction de ladite première mesure de ladite première vitesse de rotation de ladite motorisation (21,21') et de ladite vitesse de rotation de consigne de ladite motorisation (21,21').

6. Méthode selon l'une quelconque des revendications 3 à 5,
**caractérisée en ce que** ledit embrayage (106) dudit mécanisme de couplage (22,22') est réalisé en régulant une vitesse d'embrayage en fonction dudit couple fourni par ladite motorisation (21,21') et dudit couple admissible maximum par ladite BTP (23).

7. Méthode selon l'une quelconque des revendications 1 à 6,
**caractérisée en ce que** ladite détermination (102) d'un état « prêt à embrayer » pour ledit mécanisme de couplage (22,22') délivre ledit état « prêt à embrayer » lorsqu'un écart entre ladite première mesure de ladite première vitesse de rotation de ladite motorisation (21,21') et ladite vitesse de rotation de consigne de ladite motorisation (21,21') est inférieur ou égal à un premier seuil.

8. Méthode selon l'une quelconque des revendications 1 à 6,
**caractérisée en ce que** ladite détermination (101) d'un état d'une motorisation (21,21') comporte une deuxième mesure de la température d'un liquide de refroidissement de ladite motorisation (21,21') et une troisième mesure de la température d'un premier liquide de lubrification de ladite motorisation (21,21') et ladite détermination (102) d'un état « prêt à embrayer » pour ledit mécanisme de couplage (22,22') délivre ledit état « prêt à embrayer » lorsqu'un écart entre ladite première mesure de ladite première vitesse de rotation de ladite motorisation (21,21') et une vitesse de rotation de consigne de ladite motorisation (21,21') est inférieur ou égal à un premier seuil, ladite deuxième mesure de ladite température dudit liquide de refroidissement de ladite motorisation (21,21') étant située dans un premier intervalle de températures de fonctionnement et ladite troisième mesure de la température dudit premier liquide de lubrification étant située dans un second intervalle de températures de fonctionnement.

9. Méthode selon l'une quelconque des revendications 1 à 8,
**caractérisée en ce qu'**au cours de ladite détermination (105) dudit couple admissible maximum par ladite BTP (23), on mesure une quatrième mesure de la température d'un second liquide de lubrification de ladite BTP (23) et une cinquième mesure de la pression dudit second liquide de lubrification de ladite BTP (23), puis on détermine ledit couple admissible maximum en fonction de ladite quatrième mesure de ladite température dudit second liquide de lubrification de ladite BTP (23), de ladite cinquième mesure de ladite pression dudit second liquide de lubrification de ladite BTP (23) et de résultats d'essais.

10. Méthode selon l'une quelconque des revendications 1 à 8,
**caractérisée en ce qu'**au cours de ladite détermination (105) dudit couple admissible maximum par ladite BTP (23), on mesure une quatrième mesure de la température d'un second liquide de lubrification de ladite BTP (23) et une sixième mesure d'une seconde vitesse de rotation de ladite BTP (23), puis on détermine ledit couple admissible maximum en fonction de ladite quatrième mesure de ladite température dudit second liquide de lubrification de ladite BTP (23), de ladite sixième mesure de ladite seconde vitesse de rotation de ladite BTP (23) et de résultats d'essais.

11. Méthode selon l'une quelconque des revendications 1 à 8,
**caractérisée en ce qu'**au cours de ladite détermination (105) dudit couple admissible maximum par ladite BTP (23), on mesure une cinquième mesure de la pression dudit second liquide de lubrification de ladite BTP (23), puis on détermine ledit couple admissible maximum en fonction de ladite cinquième mesure de ladite pression dudit second liquide de lubrification de ladite BTP (23), ledit couple admissible maximum étant égal à un couple réduit si ladite cinquième mesure de ladite pression dudit second liquide de lubrification est inférieure ou égale à un quatrième seuil et ledit couple admissible maximum étant égal à un couple maximum si ladite cinquième mesure de ladite pression dudit second liquide de lubrification est supérieure audit quatrième seuil.

12. Dispositif (1) de commande d'un mécanisme de couplage (22,22') entre une motorisation (21,21') et une boîte de transmission principale de puissance mécanique BTP (23) destiné à un aéronef (10), ledit aéronef (10) comportant au moins une motorisation (21,21'), un système de contrôle (24,24') pour chaque motorisation (21,21'), une BTP (23) et au moins un mécanisme de couplage (22,22'), le mécanisme de couplage (22,22') étant agencé entre chaque motorisation (21,21') et ladite BTP (23) et permettant de solidariser un arbre de sortie (25) de ladite motorisation (21,21') avec un arbre d'entrée (26) de ladite BTP (23),
**caractérisé en ce que** ledit dispositif (1) de commande dudit mécanisme de couplage (22,22') comporte
- un premier moyen de détermination (3) d'un état de ladite motorisation (21,21') muni d'un premier capteur de vitesse (31) destiné à mesurer une première vitesse de rotation de ladite motorisation (21,21'),
- un deuxième moyen de détermination (5) d'un état « prêt à embrayer » pour ledit mécanisme de couplage (22,22'),
- un troisième moyen de détermination (4) d'un couple admissible maximum par ladite BTP (23) et
- un moyen de pilotage (2) de l'embrayage dudit mécanisme de couplage (22,22') lié à ladite motorisation (21,21'),
chaque système de contrôle (24,24') de ladite motorisation (21,21') étant destiné à réguler ladite première vitesse de rotation de ladite motorisation (21,21') selon une vitesse de rotation de consigne de ladite motorisation (21,21') tout en contrôlant le couple fourni par ladite motorisation (21,21') afin qu'il soit inférieur ou égal audit couple admissible maximum par ladite BTP (23) pendant ledit embrayage dudit mécanisme de couplage (22,22').

13. Dispositif (1) selon la revendication 12,
**caractérisé en ce que** ledit moyen de pilotage (2) permet l'embrayage automatique dudit mécanisme de couplage (22,22') dès que ledit état « prêt à embrayer » est déterminé.

14. Dispositif (1) selon la revendication 12,
**caractérisé en ce que** ledit dispositif (1) comporte un moyen d'information (7) et un moyen d'action (8) agencé dans un poste de pilotage dudit aéronef (10), ledit moyen d'information (7) fournissant une information « prêt à embrayer » dès que ledit état « prêt à embrayer » est déterminé, ledit moyen de pilotage (2) permettant l'embrayage automatique dudit mécanisme de couplage (22,22') dès que ledit état « prêt à embrayer » est déterminé et dès que ledit moyen d'action (8) est actionné.

15. Dispositif (1) selon la revendication 12,
**caractérisé en ce que** ledit dispositif (1) comporte un moyen d'information (7) et ledit moyen de pilotage (2) comporte un levier d'embrayage (9), ledit moyen d'information (7) et ledit levier d'embrayage (9) étant agencés dans un poste de pilotage dudit aéronef (10), ledit moyen d'information (7) fournissant une information « prêt à embrayer » dès que ledit état « prêt à embrayer » est déterminé, ledit levier d'embrayage (9) étant actionné manuellement afin d'embrayer ledit mécanisme de couplage (22,22').

16. Dispositif (1) selon l'une quelconque des revendications 12 à 15,
**caractérisé en ce que** ledit premier moyen de détermination (3) d'un état de ladite motorisation (21,21') est muni d'un deuxième et d'un troisième capteurs de température (32,33) destinés à mesurer respectivement une deuxième mesure de la température d'un liquide de refroidissement de ladite motorisation (21,21') et une troisième mesure de la température d'un premier liquide de lubrification de ladite motorisation (21,21').

17. Dispositif (1) selon l'une quelconque des revendications 12 à 16,
**caractérisé en ce que** ledit troisième moyen de détermination (4) dudit couple admissible maximum par ladite BTP (23) est muni d'un quatrième capteur de température (41) et d'un cinquième capteur de pression (42) destinés à mesurer respectivement une quatrième mesure de la température d'un second liquide de lubrification de ladite BTP (23) et une cinquième mesure de la pression dudit second liquide de lubrification de ladite BTP (23).

18. Dispositif (1) selon l'une quelconque des revendications 12 à 16,
**caractérisé en ce que** ledit troisième moyen de détermination (4) dudit couple admissible maximum par ladite BTP (23) est muni d'un quatrième capteur de température (41) et d'un sixième capteur de vitesse (43) destinés à mesurer respectivement une quatrième mesure de la température d'un second liquide de lubrification de ladite BTP (23) et une sixième mesure de ladite seconde vitesse de rotation de ladite BTP (23).

19. Dispositif (1) selon l'une quelconque des revendications 12 à 16,
**caractérisé en ce que** ledit troisième moyen de détermination (4) dudit couple admissible maximum par ladite BTP (23) est muni d'un cinquième capteur de pression (42) destiné à mesurer une cinquième mesure de la pression dudit second liquide de lubrification de ladite BTP (23), ledit couple admissible maximum étant égal à un couple réduit si ladite cinquième mesure de ladite pression dudit second liquide de lubrification est inférieure ou égale à un quatrième seuil et ledit couple admissible maximum étant égal à un couple maximum si ladite cinquième mesure de ladite pression dudit second liquide de lubrification est supérieure audit quatrième seuil.

20. Installation motrice (20) destinée à un aéronef (10), ladite installation motrice (20) comportant au moins une motorisation (21,21'), un système de contrôle (24,24') pour chaque motorisation (21,21'), une BTP (23), au moins un mécanisme de couplage (22,22') et un dispositif (1) de commande de chaque mécanisme de couplage (22,22'), un mécanisme de couplage (22,22') étant agencé entre chaque motorisation (21,21') et ladite BTP (23) et permettant de solidariser un arbre de sortie (25) de chaque motorisation (21,21') avec un arbre d'entrée (26) de ladite BTP (23),
**caractérisée en ce que** ledit dispositif (1) de commande dudit mécanisme de couplage (22,22') est selon l'une quelconque des revendications 12 à 19.

## Patentansprüche

1. Steuerungsverfahren zum Steuern eines Kupplungsmechanismus' (22, 22') zwischen einem Antriebsaggregat (21, 21') und einem mechanischen Hauptleistungsgetriebe BTP (23) für ein Luftfahrzeug (10), wobei der Kupplungsmechanismus (22, 22') es erlaubt, eine Ausgangswelle (25) des Antriebsaggregats (21, 21') mit einer Eingangswelle (26) des BTPs (23) fest zu verbinden,
**dadurch gekennzeichnet, dass** das Steuerverfahren verschiedene Schritte aufweist:
- die Bestimmung (101) eines Zustands des Antriebsaggregats (21, 21'), welche eine erste Messung einer ersten Drehzahl des Antriebsaggregats (21, 21') umfasst,
- die Bestimmung (102) eines Zustands "bereit zum Einkuppeln" für den Kupplungsmechanismus (22, 22'), der mit dem Antriebsaggregat (21, 21') verbunden ist,
- das Einkuppeln (106) des Kupplungsmechanismus' (22, 22'), der mit dem Antriebsaggregat (21, 21') verbunden ist,
- die Bestimmung (105) eines für das BTP (23) maximal zulässigen Drehmoments, und
- das Regeln (107) des Antriebsaggregats derart, dass die erste Drehzahl des Antriebsaggregats (21, 21') gemäß einer Solldrehzahl des Antriebsaggregats (21, 21') geregelt wird durch Steuern des von dem Antriebsaggregat (21, 21') gelieferten Drehmoments, derart, dass es während des Einkuppelns (106) des Kupplungsmechanismus' (22, 22') kleiner oder gleich dem für das BTP (23) maximal zulässigen Drehmoment ist.

2. Verfahren nach Anspruch 1,
**dadurch gekennzeichnet, dass** das Verfahren einen zusätzlichen Schritt (103) des Lieferns einer Information "bereit zum Einkuppeln" aufweist, sobald der Zustand "bereit zum Einkuppeln" bestimmt ist, wobei das Liefern (103) einer Information "bereit zum Einkuppeln" zwischen der Bestimmung (102) eines Zustands "bereit zum Einkuppeln" und dem Einkuppeln (106) des Kupplungsmechanismus' (22, 22') ausgeführt wird, wobei das Einkuppeln des Kupplungsmechanimus' (22, 22') manuell von einem Piloten durch einen Kupplungshebel (9) ausgeführt wird, der in einem Cockpit des Luftfahrzeugs (10) angeordnet ist.

3. Verfahren nach Anspruch 1,
**dadurch gekennzeichnet, dass** das Verfahren verschiedene zusätzliche Schritte aufweist, die zwischen der Bestimmung (102) eines Zustands "bereit zum Einkuppeln" und dem Einkuppeln (106) des Kupplungsmechanismus' (22, 22') ausgeführt werden, welche umfassen:
- das Liefern (103) einer Information "bereit zum Einkuppeln" durch ein Informationsmittel (7) des Luftfahrzeugs (10), sobald der Zustand "bereit zum Einkuppeln" bestimmt ist, und
- die Aktivierung (104) eines Kupplungsbefehls für den Kupplungsmechanismus (22, 22') durch einen Piloten, wobei das Einkuppeln des Kupplungsmechanismus' (22, 22') somit automatisch erfolgt.

4. Verfahren nach Anspruch 1,
**dadurch gekennzeichnet, dass** das Einkuppeln (106) des Kupplungsmechanismus' (22, 22') automatisch ausgeführt wird, sobald der Zustand "bereit zum Einkuppeln" bestimmt ist.

5. Verfahren nach einem der Ansprüche 3 bis 4,
**dadurch gekennzeichnet, dass** das Einkuppeln (106) des Kupplungsmechanismus' (22, 22') ausgeführt wird durch Regeln einer Kupplungsgeschwindigkeit in Abhängigkeit von der ersten Messung der ersten Drehzahl des Antriebsaggregats (21, 21') und der Solldrehzahl des Antriebsaggregats (21, 21').

6. Verfahren nach einem der Ansprüche 3 bis 5,
**dadurch gekennzeichnet, dass** das Einkuppeln (106) des Kupplungsmechanismus' (22, 22') ausgeführt wird durch Regeln einer Kupplungsgeschwindigkeit in Abhängigkeit von dem von dem Antriebsaggregat (21, 21') gelieferten Drehmoment und dem für das BTP (23) maximal zulässigen Drehmoment.

7. Verfahren nach einem der Ansprüche 1 bis 6,
**dadurch gekennzeichnet, dass** die Bestimmung (102) eines Zustands "bereit zum Einkuppeln" für den Kupplungsmechanismus (22, 22') den Zustand "bereit zum Einkuppeln" liefert, wenn ein Unterschied zwischen der ersten Messung der ersten Drehzahl des Antriebsaggregats (21, 21') und der Solldrehzahl des Antriebsaggregats (21, 21') kleiner oder gleich einem ersten Schwellenwert ist.

8. Verfahren nach einem der Ansprüche 1 bis 6,
**dadurch gekennzeichnet, dass** die Bestimmung (101) eines Zustands eines Antriebsaggregats (21, 21') eine zweite Messung der Temperatur einer Kühlflüssigkeit des Antriebsaggregats (21, 21') und eine dritte Messung der Temperatur einer ersten Schmierflüssigkeit des Antriebsaggregats (21, 21') und die Bestimmung (102) eines Zustands "bereit zum Einkuppeln" für den Kupplungsmechanimus (22, 22') umfasst, die den Zustand "bereit zum Einkuppeln" liefert, wenn der Unterschied zwischen der ersten Messung der ersten Drehzahl des Antriebsaggregats (21, 21') und einer Solldrehzahl des Antriebsaggregats (21, 21') kleiner oder gleich einem ersten Schwellenwert ist, wobei die zweite Messung der Temperatur der Kühlflüssigkeit des Antriebsaggregats (21, 21') in einem ersten Betriebstemperaturintervall liegt und die dritte Messung der Temperatur der ersten Schmierflüssigkeit in einem zweiten Betriebstemperaturbereich liegt.

9. Verfahren nach einem der Ansprüche 1 bis 8,
**dadurch gekennzeichnet, dass** während der Bestimmung (105) des für das BTP (23) maximal zulässigen Drehmoments eine vierte Temperaturmessung einer zweiten Schmierflüssigkeit des BTPs (23) und eine fünfte Druckmessung der zweiten Schmierflüssigkeit des BTPs (23) durchgeführt werden, und das maximal zulässige Drehmoment in Abhängigkeit von der vierten Messung der Temperatur der zweiten Schmierflüssigkeit des BTPs (23), von der fünften Messung des Drucks der zweiten Schmierflüssigkeit des BTPs (23) und den Versuchsergebnissen bestimmt wird.

10. Verfahren nach einem der Ansprüche 1 bis 8,
**dadurch gekennzeichnet, dass** während der Bestimmung (105) des für das BTP (23) maximal zulässigen Drehmoments eine vierte Messung der Temperatur einer zweiten Schmierflüssigkeit des BTPs (23) und eine sechste Messung einer zweiten Drehzahl des BTPs (23) durchgeführt werden, und dann das maximal zulässige Drehmoment in Abhängigkeit von der vierten Messung der Temperatur der zweiten Schmierflüssigkeit des BTPs (23), der sechsten Messung der zweiten Drehzahl des BTPs (23) und den Versuchsergebnissen bestimmt wird.

11. Verfahren nach einem der Ansprüche 1 bis 8,
**dadurch gekennzeichnet, dass** während der Bestimmung (105) des für das BTP (23) maximal zulässigen Drehmoments eine fünfte Druckmessung der zweiten Schmierflüssigkeit des BTPs (23) durchgeführt wird, und das maximal zulässige Drehmoment in Abhängigkeit von der fünften Messung des Drucks der zweiten Schmierflüssigkeit des BTPs (23) bestimmt wird, wobei das maximal zulässige Drehmoment gleich einem reduzierten Drehmoment ist, wenn die fünfte Messung des Drucks des zweiten Schmiermittels kleiner oder gleich einem vierten Schwellenwert ist, und das maximal zulässige Drehmoment gleich einem maximalen Drehmoment ist, wenn die fünfte Messung des Drucks der zweiten Schmierflüssigkeit größer als der vierte Schwellenwert ist.

12. Vorrichtung (1) zur Steuerung eines Kupplungsmechanismus' (22, 22') zwischen einem Antriebsaggregat (21, 21') und einem mechanischen Hauptleistungsgetriebe BTP (23), das für ein Luftfahrzeug (10) bestimmt ist, wobei das Luftfahrzeug (10) mindestens ein Antriebsaggregat (21, 21'), ein Steuersystem (24, 24') für jedes Antriebsaggregat (21, 21'), ein BTP (23) und mindestens einen Kupplungsmechanismus (22, 22') aufweist, wobei der Kupplungsmechanismus (22, 22') zwischen jedem Antriebsaggregat (21, 21') und dem BTP (23) angeordnet ist und es erlaubt, eine Ausgangswelle (25) des Antriebsaggregats (21, 21') mit einer Eingangswelle (26) des BTPs (23) fest zu verbinden,
**dadurch gekennzeichnet, dass** die Steuervorrichtung (1) des Kupplungsmechanismus' (22, 22') aufweist:
- ein erstes Mittel (3) zur Bestimmung eines Zustands des Antriebsaggregats (21, 21'), welches mit einem ersten Drehzahlmesser (31) versehen ist, der dazu bestimmt ist, eine erste Drehzahl des Antriebsaggregats (21, 21') zu messen,
- ein zweites Mittel (5) zur Bestimmung eines Zustands "bereit zum Einkuppeln" für den Kupplungsmechanismus (22, 22'),
- ein drittes Mittel (4) zur Bestimmung eines für das BTP (23) maximal zulässigen Drehmoments, und
- ein Mittel (2) zur Steuerung des Einkuppelns des Kupplungsmechanismus' (22, 22'), das mit dem Antriebsaggregat (21, 21') verbunden ist, wobei jedes Steuersystem (24, 24') des Antriebsaggregats (21, 21') dazu bestimmt ist, die erste Drehzahl des Antriebsaggregats (21, 21') gemäß einer Solldrehzahl des Antriebsaggregats (21, 21') zu regeln durch Steuerung des Drehmoments, welches von dem Antriebsaggregat (21, 21') geliefert wird, derart, dass dieses kleiner oder gleich dem für das BTP (23) maximal zulässigen Drehmoment während des Einkuppelns des Kupplungsmechanismus' (22, 22') ist.

13. Vorrichtung (1) nach Anspruch 12,
**dadurch gekennzeichnet, dass** das Steuermittel (2) das automatische Einkuppeln des Kupplungsmechanismus' (22, 22') erlaubt, sobald der Zustand "bereit zum Einkuppeln" bestimmt ist.

14. Vorrichtung (1) nach Anspruch 12,
**dadurch gekennzeichnet, dass** die Vorrichtung (1) ein Informationsmittel (7) und ein Aktivierungsmittel (8) aufweist, das in einem Cockpit des Luftfahrzeugs (10) angeordnet ist, wobei das Informationsmittel (7) eine Information "bereit zum Einkuppeln" liefert, sobald der Zustand "bereit zum Einkuppeln" bestimmt ist, wobei das Steuermittel (2) das automatische Einkuppeln des Kupplungsmechanismus' (22, 22') erlaubt, sobald der Zustand "bereit zum Einkuppeln" bestimmt ist und sobald das Aktivierungsmittel (8) aktiviert ist.

15. Vorrichtung (1) nach Anspruch 12,
**dadurch gekennzeichnet, dass** die Vorrichtung (1) ein Informationsmittel (7) aufweist, und das Steuermittel (2) einen Kupplungshebel (9) aufweist, wobei das Informationsmittel (7) und der Kupplungshebel (9) in einem Cockpit des Luftfahrzeugs (10) angeordnet sind, wobei das Informationsmittel (7) eine Information "bereit zum Einkuppeln" liefert, sobald der Zustand "bereit zum Einkuppeln" bestimmt ist, wobei der Kupplungshebel (9) manuell betätigt wird, um den Kupplungsmechanismus (22, 22') einzukuppeln.

16. Vorrichtung (1) nach einem der Ansprüche 12 bis 15,
**dadurch gekennzeichnet, dass** das erste Mittel (3) zur Bestimmung eines Zustands des Antriebsaggregats (21, 21') mit einem zweiten und einem dritten Temperatursensor (32, 33) versehen ist, die dazu bestimmt sind, jeweils eine zweite Messung der Temperatur einer Kühlflüssigkeit des Antriebsaggregats (21, 21') und eine dritte Messung der Temperatur einer ersten Schmierflüssigkeit des Antriebsaggregats (21, 21') durchzuführen.

17. Vorrichtung (1) nach einem der Ansprüche 12 bis 16,
**dadurch gekennzeichnet, dass** das dritte Mittel (4) zur Bestimmung des für das BTP (23) maximal zulässigen Drehmoments mit einem vierten Temperatursensor (41) und einem fünften Drucksensor (42) versehen ist, die dazu bestimmt sind, jeweils einen vierten Temperaturmesswert einer zweiten Schmierflüssigkeit des BTPs (23) und einen fünften Messwert des Drucks der zweiten Schmierflüssigkeit des BTPs (23) zu messen.

18. Vorrichtung (1) nach einem der Ansprüche 12 bis 16,
**dadurch gekennzeichnet, dass** das dritte Mittel (4) zur Bestimmung des für das BTP (23) maximal zulässigen Drehmoments mit einem vierten Temperatursensor (41) und einem sechsten Drehzahlmesser (43) versehen ist, die dazu bestimmt sind, jeweils einen vierten Temperaturmesswert einer zweiten Schmierflüssigkeit des BTPs (23) und einen sechsten Messwert der zweiten Drehzahl des BTPs (23) zu messen.

19. Vorrichtung (1) nach einem der Ansprüche 12 bis 16,
**dadurch gekennzeichnet, dass** das dritte Mittel (4) zur Bestimmung des für das BTP (23) maximal zulässigen Drehmoments mit einem fünften Druckmesser (42) versehen ist, der dazu bestimmt ist, einen fünften Druckmesswert der zweiten Schmierflüssigkeit des BTPs (23) zu messen, wobei das maximal zulässige Drehmoment gleich einem reduzierten Drehmoment ist, wenn der fünfte Messwert des Drucks der zweiten Schmierflüssigkeit kleiner oder gleich einem vierten Schwellenwert ist, und das maximal zulässige Drehmoment gleich einem maximalen Drehmoment ist, wenn der fünfte Messwert des Drucks der zweiten Schmierflüssigkeit größer als der vierte Schwellenwert ist.

20. Triebwerksanlage (20) für ein Luftfahrzeug (10), wobei die Triebwerksanlage (20) mindestens ein Antriebsaggregat (21, 21'), ein Steuersystem (24, 24') für jedes Antriebsaggregat (21, 21'), ein BTP (23), mindestens einen Kupplungsmechanismus (22, 22') und eine Vorrichtung (1) zum Steuern eines jeden Kupplungsmechanismus (22, 22') aufweist, wobei ein Kupplungsmechanismus (22, 22') zwischen jedem Antriebsaggregat (21, 21') und dem BTP (23) angeordnet ist und es erlaubt, eine Ausgangswelle (25) eines jeden Antriebsaggregats (21, 21') mit einer Eingangswelle (26) des BTP (23) fest zu verbinden,
**dadurch gekennzeichnet, dass** die Vorrichtung (1) zur Steuerung des Kupplungsmechanismus' (22, 22') eine Vorrichtung gemäß einem der Ansprüche 12 bis 19 ist.

## Claims

1. A control method for controlling a coupling mechanism (22, 22') between a motor drive (21, 21') and a main mechanical power transmission gearbox MGB (23) intended for an aircraft (10), said coupling mechanism (22, 22') making it possible to connect an output shaft (25) of said motor drive (21, 21') with an input shaft (26) of said MGB (23),
**characterised in that** said control method comprises different steps:
- determination (101) of a state of said motor drive (21, 21'),
comprising a first measurement of a first speed of rotation of said motor drive (21,21'),
- determination (102) of a "ready to engage" state for said coupling mechanism (22, 22') linked to said motor drive (21, 21'),
- engagement (106) of said coupling mechanism (22, 22') linked to said motor drive (21, 21'),
- determination (105) of a maximum allowable torque by said MGB (23), and
- regulation (107) of said motor drive so that said first speed of rotation of said motor drive (21, 21') is regulated in accordance with a set speed of rotation of said motor drive (21, 21') while controlling the torque supplied by said motor drive (21, 21') so that it is less than or equal to said maximum allowable torque by said MGB (23) during said engagement (106) of said coupling mechanism (22, 22').

2. A method according to Claim 1,
**characterised in that** said method comprises an additional step of supplying (103) "ready to engage" information as soon as said "ready to engage" state is determined, said supplying (103) of "ready to engage" information being effected between said determination (102) of a "ready to engage" state and said engagement (106) of said coupling mechanism (22, 22'), said engagement of said coupling mechanism (22, 22') then being effected manually by a pilot by means of an engagement lever (9) arranged in a cockpit of said aircraft (10).

3. A method according to Claim 1,
**characterised in that** said method comprises different additional steps located between said determination (102) of a "ready to engage" state and said engagement (106) of said coupling mechanism (22, 22'), comprising:
- supplying (103) of "ready to engage" information by an information means (7) of said aircraft (10) as soon as said "ready to engage" state is determined, and
- activation (104) by a pilot of an engagement command for engaging said coupling mechanism (22, 22'), said engagement of said coupling mechanism (22, 22') then being effected automatically.

4. A method according to Claim 1,
**characterised in that** said engagement (106) of said coupling mechanism (22, 22') is effected automatically as soon as said "ready to engage" state is determined.

5. A method according to any one of Claims 3 to 4,
**characterised in that** said engagement (106) of said coupling mechanism (22, 22') is effected by regulating a speed of engagement as a function of said first measurement of said first speed of rotation of said motor drive (21, 21') and of said set speed of rotation of said motor drive (21, 21').

6. A method according to any one of Claims 3 to 5,
**characterised in that** said engagement (106) of said coupling mechanism (22, 22') is effected by regulating a speed of engagement as a function of said torque supplied by said motor drive (21, 21') and of said maximum allowable torque by said MGB (23).

7. A method according to any one of Claims 1 to 6,
**characterised in that** said determination (102) of a "ready to engage" state for said coupling mechanism (22, 22') delivers said "ready to engage" state when a difference between said first measurement of said first speed of rotation of said motor drive (21, 21') and said set speed of rotation of said motor drive (21, 21') is less than or equal to a first threshold.

8. A method according to any one of Claims 1 to 6,
**characterised in that** said determination (101) of a state of a motor drive (21, 21') comprises a second measurement, of the temperature of a cooling liquid for cooling said motor drive (21, 21'), and a third measurement, of the temperature of a first lubricating liquid for lubricating said motor drive (21, 21'), and said determination (102) of a "ready to engage" state for said coupling mechanism (22, 22') delivers said "ready to engage" state when a difference between said first measurement of said first speed of rotation of said motor drive (21, 21') and a set speed of rotation of said motor drive (21, 21') is less than or equal to a first threshold, said second measurement, of said temperature of said cooling liquid for cooling said motor drive (21, 21'), being situated in a first range of operating temperatures, and said third measurement, of the temperature of said first lubricating liquid, being situated in a second range of operating temperatures.

9. A method according to any one of Claims 1 to 8,
**characterised in that** during said determination (105) of said maximum allowable torque by said MGB (23) a fourth measurement, of the temperature of a second lubricating liquid of said MGB (23), and a fifth measurement, of the pressure of said second lubricating liquid of said MGB (23), is measured, then said maximum allowable torque is determined as a function of said fourth measurement, of said temperature of said second lubricating liquid of said MGB (23), of said fifth measurement, of said pressure of said second lubricating liquid of said MGB (23), and of results of tests.

10. A method according to any one of Claims 1 to 8,
**characterised in that** during said determination (105) of said maximum allowable torque by said MGB (23) a fourth measurement, of the temperature of a second lubricating liquid of said MGB (23), and a sixth measurement, of a second speed of rotation of said MGB (23) is measured, then said maximum allowable torque is determined as a function of said fourth measurement, of said temperature of said second lubricating liquid of said MGB (23), of said sixth measurement, of said second speed of rotation of said MGB (23), and of results of tests.

11. A method according to any one of Claims 1 to 8,
**characterised in that** during said determination (105) of said maximum allowable torque by said MGB (23) a fifth measurement, of the pressure of said second lubricating liquid of said MGB (23), is measured, then said maximum allowable torque is determined as a function of said fifth measurement, of said pressure of said second lubricating liquid of said MGB (23), said maximum allowable torque being equal to a reduced torque if said fifth measurement, of said pressure of said second lubricating liquid, is less than or equal to a fourth threshold, and said maximum allowable torque being equal to a maximum torque if said fifth measurement, of said pressure of said second lubricating liquid, is greater than said fourth threshold.

12. A control device (1) for controlling a coupling mechanism (22, 22') between a motor drive (21, 21') and a main mechanical power transmission gearbox MGB (23) intended for an aircraft (10), said aircraft (10) comprising at least one motor drive (21, 21'), a control system (24, 24') for each motor drive (21, 21'), an MGB (23) and at least one coupling mechanism (22, 22'),
the coupling mechanism (22, 22') being arranged between each motor drive (21, 21') and said MGB (23) and making it possible to connect an output shaft (25) of said motor drive (21, 21') with an input shaft (26) of said MGB (23),
**characterised in that** said control device (1) for controlling said coupling mechanism (22, 22') comprises
- a first determination means (3) for determining a state of said motor drive (21, 21') provided with a first, speed, sensor (31) intended to measure a first speed of rotation of said motor drive (21, 21'),
- a second determination means (5) for determining a "ready to engage" state for said coupling mechanism (22, 22'),
- a third determination means (4) for determining a maximum allowable torque by said MGB (23), and
- a control means (2) for controlling the engagement of said coupling mechanism (22, 22') linked to said motor drive (21, 21'),
each control system (24, 24') for controlling said motor drive (21, 21') being intended to regulate said first speed of rotation of said motor drive (21, 21') in accordance with a set speed of rotation of said motor drive (21, 21') while controlling the torque supplied by said motor drive (21, 21') so that it is less than or equal to said maximum allowable torque by said MGB (23) during said engagement of said coupling mechanism (22, 22').

13. A device (1) according to Claim 12,
**characterised in that** said control means (2) allows the automatic engagement of said coupling mechanism (22, 22') as soon as said "ready to engage" state is determined.

14. A device (1) according to Claim 12,
**characterised in that** said device (1) comprises an information means (7) and an action means (8) arranged in a cockpit of said aircraft (10), said information means (7) supplying "ready to engage" information as soon as said "ready to engage" state is determined, said control means (2) allowing the automatic engagement of said coupling mechanism (22, 22') as soon as said "ready to engage" state is determined and as soon as said action means (8) is actuated.

15. A device (1) according to Claim 12,
**characterised in that** said device (1) comprises an information means (7) and said control means (2) comprises an engagement lever (9), said information means (7) and said engagement lever (9) being arranged in a cockpit of said aircraft (10), said information means (7) supplying "ready to engage" information as soon as said "ready to engage" state is determined, said engagement lever (9) being actuated manually so as to engage said coupling mechanism (22, 22').

16. A device (1) according to any one of Claims 12 to 15,
**characterised in that** said first determination means (3) for determining a state of said motor drive (21, 21') is provided with a second and a third, temperature, sensor (32, 33) which are intended to measure a second measurement of the temperature of a cooling liquid of said motor drive (21, 21') and a third measurement of the temperature of a first lubricating liquid of said motor drive (21, 21'), respectively.

17. A device (1) according to any one of Claims 12 to 16,
**characterised in that** said third determination means (4) for determining said maximum allowable torque by said MGB (23) is provided with a fourth, temperature, sensor (41) and a fifth, pressure, sensor (42) which are intended to measure a fourth measurement, of the temperature of a second lubricating liquid of said MGB (23), and a fifth measurement, of the pressure of said second lubricating liquid of said MGB (23), respectively.

18. A device (1) according to any one of Claims 12 to 16,
**characterised in that** said third determination means (4) for determining said maximum allowable torque by said MGB (23) is provided with a fourth, temperature, sensor (41) and a sixth, speed, sensor (43) which are intended to measure a fourth measurement, of the temperature of a second lubricating liquid of said MGB (23), and a sixth measurement, of said second speed of rotation of said MGB (23), respectively.

19. A device (1) according to any one of Claims 12 to 16,
**characterised in that** said third determination means (4) for determining said maximum allowable torque by said MGB (23) is provided with a fifth, pressure, sensor (42) intended to measure a fifth measurement, of said pressure of said second lubricating liquid of said MGB (23), said maximum allowable torque being equal to a reduced torque if said fifth measurement, of said pressure of said second lubricating liquid, is less than or equal to a fourth threshold, and said maximum allowable torque being equal to a maximum torque if said fifth measurement, of said pressure of said second lubricating liquid, is greater than said fourth threshold.

20. A power plant (20) intended for an aircraft (10), said power plant (20) comprising at least one motor drive (21, 21'), a control system (24, 24') for each motor drive (21, 21'), an MGB (23), at least one coupling mechanism (22, 22') and a control device (1) for controlling each coupling mechanism (22, 22'), a coupling mechanism (22, 22') being arranged between each motor drive (21, 21') and said MGB (23) and making it possible to connect an output shaft (25) of each motor drive (21, 21') with an input shaft (26) of said MGB (23),
**characterised in that** said control device (1) for controlling said coupling mechanism (22, 22') is in accordance with any one of Claims 12 to 19.
